(19) Europäisches Patentamt
European Patent Office
Office européen des brevets

(11) **EP 4 039 512 A1**

(12) **EUROPÄISCHE PATENTANMELDUNG**

(43) Veröffentlichungstag:
**10.08.2022   Patentblatt 2022/32**

(21) Anmeldenummer: **21214700.3**

(22) Anmeldetag: **15.12.2021**

(51) Internationale Patentklassifikation (IPC):
**B60H 1/00** *(2006.01)*     **B01D 46/00** *(2022.01)*
**F24F 11/39** *(2018.01)*     **B60H 3/06** *(2006.01)*
**F24F 11/00** *(2018.01)*

(52) Gemeinsame Patentklassifikation (CPC):
**B60H 1/008; B01D 46/0028; B01D 46/0086;
B60H 1/00828; B60H 1/00849; F24F 11/39;**
B60H 2003/0683; F24F 2011/0002

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **03.02.2021   DE 102021102517**

(71) Anmelder: **Carl Freudenberg KG
69469 Weinheim (DE)**

(72) Erfinder:
• **Häfner, Uwe
77964 Kehl (DE)**
• **Blauth, Sascha
67688 Rodenbach (DE)**
• **Sieh, Maik
69207 Sandhausen (DE)**

(54) **VERFAHREN UND VORRICHTUNG ZUM BETREIBEN EINER LÜFTUNGSANLAGE FÜR LUFT IN EINEM INNENRAUM**

(57)    Die Erfindung betrifft ein Verfahren zum Betreiben einer Lüftungsanlage für Innenraumluft in einem Innenraum, insbesondere eines Kraftfahrzeugs, mit folgenden Schritten:
- Bereitstellen eines Frischluftanteils von zugeführter Frischluft und eines Umluftvolumenstroms entsprechend einer vorgegebenen oder ausgewählten Betriebsstrategie;
- Bestimmen von Einstellungen für einen Umluftsteller (5) zum Einstellen eines Frischluftanteils, insbesondere eine Umluftklappe oder ein Umluftventil, und einer Gebläseleistung eines Gebläses (7) zum Einstellen eines Mischluftvolumenstroms ($Q_M$) aus zugeführter Um- und Frischluft;
- Erhöhen des Frischluftanteils und/oder des Mischluftvolumenstroms ($Q_M$) abhängig von einer Pathogen-Filtrationseffizienz eines Innenraumfilters (8) und einem vorgegebenen Belastungsschutzvolumenstrom als ein pathogener Innenraumkonzentrationsgrenzwert ($C_P$) für eine maximale Konzentration von pathogenen Aerosolen.

Fig. 2

EP 4 039 512 A1

## Beschreibung

### Technisches Gebiet

Die Erfindung betrifft Lüftungsanlagen, wie z.B. Belüftungs- und Klimaanlagen oder Belüftungs- und Klimatisierungssysteme für Innenräume, insbesondere für Innenräume von Verkehrsmitteln oder sonstigen. Die Erfindung betrifft weiterhin die Steuerung bzw. Regelung von Luftbehandlungssystemen unter Einhaltung einer pathogenen Maximalbelastung mit Aerosolen für sich im Innenraum befindliche Personen.

### Technischer Hintergrund

Lüftungsanlagen für Innenräume, insbesondere von Verkehrsmitteln, können mit verschiedenen Regelungsstrategien und Betriebsarten betrieben werden. Diese können beispielsweise einen temperaturgeregelten Betrieb, einen Umluft- bzw. Sekundärluftbetrieb, einen Defrostbetrieb zum schnellstmöglichen Enteisen von Fahrzeugglasflächen, wie z. B. Frontscheiben, einen Betrieb mit maximaler Kühlleistung der Innenraumluft sowie einem Betrieb zur Optimierung der Luftreinigungswirkung, insbesondere gegenüber pathogenen Aerosolen, und dergleichen umfassen.

Die EP 1 422 089 A2 bezieht sich auf ein Verfahren zur Bekämpfung von Gerüchen und/oder Schadstoffen im Fahrzeuginnenraum, bei dem mittels eines Sensors zur Erfassung von Gerüchen bzw. Schadstoffen in der Außenluft ein Lüftungssystem gesteuert wird. Die Lüftungsklappen werden geschlossen, wenn in der Außenluft Gerüche bzw. Schadstoffe erfasst werden. Zusätzlich wird mittels eines Luftqualitätssensors im Fahrzeuginnenraum das Lüftungssystem derart gesteuert, dass beim Erfassen von Gerüchen bzw. Schadstoffen im Fahrzeuginnenraum die Lüftungsklappen unabhängig vom Signal des Sensors zur Erfassung von Gerüchen bzw. Schadstoffen in der Außenluft geöffnet werden.

Aus der DE 10 2005 006 312 A1 geht ein Steuermodul hervor für eine Lüftungseinheit zur Behandlung von Innenraumluft eines Fahrzeugs mit Sensoren zur Detektion von chemischen Bestandteilen eines Luftstromes und mit einer Prozessoreinheit, die ein Steuersignal zur Ansteuerung der Lüftungseinheit generiert. Erfindungsgemäß wird der zu untersuchende Luftstrom aus der Innenraumluft abgegriffen, wobei Sensoren vorgesehen sind, wobei die Prozessoreinheit einen Algorithmus enthält, der aus den Signalen sämtlicher Sensoren ein Chrakteristikum für einen bestimmten Zustand berechnet, das charakteristisch für die aktuelle Zusammensetzung der untersuchten Innenraumluft ist und mit in der Prozessoreinheit abgespeicherten, vorgegebenen Charakteristika für einen bestimmten Zustand für unterschiedliche Szenarien einer möglichen Luftzusammensetzung verglichen wird.

Ähnliche Einrichtungen sind auch aus der DE 10 2013 220 369 A1 und der DE 100 13 841 A1 bekannt.

Der aktuelle Status von Betriebsparametern der Lüftungsanlage sowie des Zustands der Innenraumluft können zudem einem Benutzer in geeigneter Weise angezeigt werden.

Die Aktivierung der einzelnen Betriebsarten kann dabei manuell durch den Benutzer oder aufgrund einer vorgegebenen Betriebsstrategie basierend auf Umgebungszuständen oder sonstigen Betriebsbedingungen gemäß einem vorgegebenen Programm erfolgen. Insbesondere bei Luftbehandlungssystemen, die ganz oder teilweise mit dem Ziel einer Regelung der Lufttemperatur im Innenraum betrieben werden, ist der Umluft- bzw. Sekundärluftbetrieb vorteilhaft, da der Energieeintrag bei Umwälzung von bereits vorgekühlter bzw. vorerwärmter Innenraumluft nicht geringer ausfallen kann, als bei teilweiser oder maximaler Zufuhr von Außenluft.

Die Nutzung eines Umluftbetriebs hat jedoch den Nachteil, dass sich pathogene Aerosole, wie Schadstoffpartikel oder Bioaerosole, im Innenraum anreichern können. Diese können beispielsweise pathogene Viruskopien enthalten, so dass sich bei mit derartigen Bioaerosolen kontaminierter Innenraumluft die Infektionsgefahr für sich im Innenraum aufhaltenden Personen erhöht. Für diese kann dabei das Infektionsrisiko aufgrund eines durch pathogene Umgebungsluft verursachten Pathogeneintrags im Vergleich zum Infektionsrisiko durch den Pathogeneintrag von Innenraumquellen (i.d.R. durch andere sich im Innenraum aufhaltenden Personen) vernachlässigt werden. Daher kann der Umluftbetrieb das Infektionsrisiko für sich im Innenraum befindliche Personen deutlich erhöhen, wenn keine Luftreinigungsstrategie vorgesehen wird.

Es ist daher Aufgabe der vorliegenden Erfindung, ein Verfahren zum Betreiben einer Lüftungsanlage zur Verfügung zu stellen, bei dem die pathogene Innenraumbelastung mit pathogenen Aerosolen aufgrund sich im Innenraum befindlicher Emissionsquellen wie z. B. infektiöse bzw. rauchende Personen verringert wird.

### Offenbarung der Erfindung

Diese Aufgabe wird durch das Verfahren zum Betreiben einer Lüftungsanlage, gemäß Anspruch 1 sowie eine Lüftungsanlage gemäß den Nebengeordneten Ansprüchen gelöst.

Weitere Ausgestaltungen sind in den abhängigen Ansprüchen angegeben.

Gemäß einem ersten Aspekt ist ein Verfahren zum Betreiben einer Lüftungsanlage für Innenraumluft in einem Innenraum, insbesondere eines Kraftfahrzeugs, vorgesehen, mit folgenden Schritten:

- Bereitstellen eines Frischluftanteils von zugeführter Frischluft und eines Umluftvolumenstroms entsprechend einer vorgegebenen oder ausgewählten Betriebsstrategie;
- Bestimmen von Einstellungen für einen Umluftsteller zum Einstellen des Frischluftanteils, insbesondere eine Umluftklappe oder ein Umluftventil, und einer Gebläseleistung zum Einstellen eines Mischluftvolumenstroms aus zugeführter Um- und Frischluft;

- Erhöhen des Frischluftanteils und/oder des Mischluftvolumenstroms abhängig von einer Pathogen-Filtrationseffizienz eines Innenraumfilters und einem vorgegebenen Belastungsschutzvolumenstrom als ein pathogener Innenraumkonzentrationsgrenzwert für eine maximal zulässige Konzentration von pathogenen Aerosolen.

Auf diese Weise wird in einer Lüftungsanlage für ein Luftbehandlungssystem für einen Innenraum erreicht, dass die Lüftungsanlage Innenraumluft umwälzt und dieser einen vorgebbaren variablen Frischluftanteil entsprechend einer vorgegebenen Betriebsstrategie beimischt, wobei der Frischluftanteil abhängig von einem Volumenstrom durch die Lüftungsanlage und abhängig von der durch eine Person über ihre Aufenthaltsdauer im Innenraum über die Atmung aufgenommene maximal zulässige Pathogenfracht von pathogenen Aerosolen, wie Schadstoffpartikeln und/oder Bioaerosolen, eingestellt wird.

Bestandteil der Lüftungsanlagen sind Innenraumfilter, die den dem Innenraum zugeführten Luftströmen Schadstoffe entziehen. Hierzu umfassen Innenraumfilter partikelfilternde Bereiche, die luftgetragene Partikeln und Aerosole filternd abscheiden. In einer weiteren Ausführungsform können Innenraumfilter zusätzlich adsorbierende Bereiche umfassen, an deren Oberflächen organische und/oder anorganische Gase aus den Luftströmen angereichert werden können.

Technisch ist Umluft als Abluft definiert, die in ein Luftbehandlungssystem rückgeführt wird und mindestens einem Raum als Bestandteil der Zuluft wieder zugeführt wird, aus dem sie nicht entnommen wurde. Von der Umluft zu unterscheiden ist die Sekundärluft, die einem Raum entnommen und nach Behandlung demselben Raum wieder zugeführt wird. Umgangssprachlich wird insbesondere bei Luftbehandlungssystemen in Fahrzeugen abweichend zur technischen Definition nicht von einem Sekundärluftbetrieb, sondern von einem "Umluftbetrieb" gesprochen, der keine Außenluft zuführt, um beispielsweise einen gewünschten Temperaturzustand schneller zu erreichen. Durch diesen "Umluftbetrieb" können auch Abgase, Partikel oder Gerüche aus der Umgebung zeitweise vom Eindringen in den Innenraum abgehalten werden. Zur sprachlichen Vereinfachung wird nachfolgend der Begriff "Umluft" für "Sekundär- und/oder Umluft" verwendet.

Das obige Verfahren ermöglicht es, die Vorgaben einer Betriebsstrategie einer Lüftungsanlage einer Einhaltung eines pathogenen Innenraumkonzentrationsgrenzwertes (in Mengeneinheit/$m^3$, wobei Mengeneinheit die Anzahl der z.B. durch die PCR-Methode ermittelten Viren oder die z.B. durch die pfu-Methode ermittelte viable Virenanzahl (plaque forming units) umfassen kann) von pathogenen Aerosolen, wie Schadstoffpartikeln und/oder Bioaerosolen, unterzuordnen, so dass die Belastung von Personen mit pathogenen Aerosolen über die Aufenthaltsdauer im Innenraum unter einen durch den pathogenen Innenraumkonzentrationsgrenzwert vorgegebenen kritischen Konzentrationswert begrenzt ist.

Die Betriebsstrategie kann einen temperaturgeregelten Betrieb, der vorsieht, eine Temperatur der Innenraumluft konstant zu halten, einen Betrieb mit einer maximalen Kühlleistung für die Innenraumluft, einen Enteisungsbetrieb mit einer maximalen Heizleistung für die Innenraumluft und eine Luftqualitätsregelung der Innenraumluft, insbesondere unter Berücksichtigung von Energiesparpotentialen, umfassen. Diese Betriebsstrategien sehen die Einstellung des geförderten Mischluftvolumenstroms, die Einstellung des Frischluftanteils und ggfs. weitere Einstellmöglichkeiten vor.

Da der durch die Umgebungskonzentration von Aerosolen verursachte Pathogeneintrag in den Innenraum im Vergleich zum Pathogeneintrag durch Quellen im Innenraum zu vernachlässigen ist, lässt sich der Eintrag von Pathogen in den Innenraum durch eine Innenraumquelle mit der Pathogen-Emissionsrate E (Mengeneinheit/h) darstellen.

Bei Betrachtung des Beharrungszustands (im Gleichgewicht keine zeitliche Zustandsänderung ohne Einwirkung von außen) können drei Prozesse als Pathogensenken der Innenraumluft Pathogene durch Bioaerosolaustrag entziehen:

- Pathogenaustrag durch Luftströme aus dem Innenraum (Gebäude/ Kabine) durch das Gleichgewicht zwischen ein- und ausgehenden Mengenströmen:

  $Q_L$ - Volumenstrom der Infiltration durch die Innenraumhülle ($m^3$/h)

  $Q_N$ - nicht erzwungene, natürliche Belüftung z. B. durch offene Fenster ($m^3$/h)

  $Q_F$ - Frischluftvolumenstrom durch erzwungene, mechanische Konvektion ($m^3$/h)

- Abscheidung von Pathogenen durch die Filtration zirkulierender Mischluft:

  $Q_R$ - Umluftvolumenstrom der erzwungenen mechanischen Rezirkulation ($m^3$/h)

  $\eta_R$ - Pathogen-Filtrationseffizienz für pathogene Aerosole, wie Schadstoffpartikel oder Bioaerosole

- Deposition von pathogenen Aerosolen auf Innenraumoberflächen:

  V - Innenraumvolumen ($m^3$)

  $\beta$ - Koeffizient für die Pathogen-Deposition an den Innenraumoberflächen ($h^{-1}$)

Durch die quantitative Betrachtung der Prozesse, die der Innenraumluft Schadstoffpartikel oder Bioaerosole zuführen oder entziehen, lässt sich mit der Vereinfachung eines kumulierten Frischluftvolumenstroms $Q^*_F = Q_F + Q_L + Q_N$ aus der Umgebung die resultierende Innenraum-Beharrungskonzentration C der Pathogene von Schadstoffpartikel oder Bioaerosolen bei idealer Durchmischung des Innenraums und vernachlässigbar kleiner Umgebungskonzentration pathogener Schadstoffpartikel oder Bioaerosole leicht bestimmen:

$$C = \frac{E}{Q^*_F + Q_R \eta_R + \beta V}$$

Dabei stellt sich insbesondere in klimatisierten Fahrzeugkabinen eine solche Innenraum-Beharrungskonzentration in kurzer Zeit ein, vergleicht man diese Zeitdauer mit Aufenthaltsdauern von Personen im Innenraum, die üblicherweise zur Bewertung eines Infektionsrisikos zugrunde gelegt werden: Ist ein Innenraum frei von jeglicher pathogenen Belastung und setzt zum Zeitpunkt t=0 der Eintrag von Pathogen durch eine Innenraumquelle mit der Pathogen-Emissionsrate E ein, so betragen die Relaxationszeiten solcher Systeme meist wenige Minuten während die zur Bewertung des Infektionsrisikos üblicherweise zugrunde gelegten Aufenthaltsdauern mehrere Stunden betragen können.

In einem geschlossenen System ergibt sich für eine Lüftungsanlagenkonfiguration die Beharrungskonzentration C an pathogenen Schadstoffpartikel oder

Bioaerosolen im Innenraum bei ausschließlichem Umluftbetrieb unter den vereinfachenden Annahmen einer kritischen Belastungsrisikobewertung bzw. einer Infektionsrisikobewertung, dass keine pathogen-verdünnende Frischluftventilation, keine pathogen-verdünnende Infiltration und kein Austrag von pathogenen Schadstoffpartikel oder Bioaerosolen aus der Innenraumluft durch Deposition oder Inaktivierung über die Zeit vorliegt, aus dem Zusammenhang:

$$C = \frac{E}{Q_R \eta_R}$$

Des Weiteren lässt sich zur Bewertung des Infektionsrisikos für eine Person im Innenraum die über ihre Aufenthaltsdauer im Innenraum durch über die Atmung aufgenommene maximal zulässige Pathogenfracht (Menge an pathogenen Schadstoffpartikeln oder Bioaerosolen an der Infektionsschwelle) festlegen. Diese ist das Produkt aus einer maximal zulässigen Innenraumkonzentration $C_P$ und dem über die Aufenthaltsdauer aufgenommenen Atemvolumen. Die maximal zulässige Pathogenfracht, z. B. angegeben in einer Anzahl von Schadstoffpartikeln bestimmter Größenordnung oder der Anzahl von PCR-Viruskopien oder viable Virenanzahl pfu lässt sich ebenso wie die Emissionsrate unterschiedlicher Pathogen-Quellen (i.d.R. infizierte Personen) basierend auf Infektionsstudien abhängig von der Art der pathogenen Aerosole angeben. Das Atemvolumen lässt sich aus den Atemminutenvolumina unterschiedlicher Aktivitätszustände ableiten.

Somit ergibt sich im Beharrungszustand eine erforderliche pathogenspezifische Luftreinigungsleistung für einen reinen Umluftbetrieb als

$$pCCM = C_P\, \eta_R\, Q_R \geq E$$

wobei pCCM der pathogenspezifischen Luftreinigungsleistung bei einer kritischen Belastungsrisikobewertung bzw. einer kritischen Infektionsrisikobewertung (bei Bioaerosolen) ohne Berücksichtigung von Infiltration, Deposition und Inaktivierung von pathogenen Bioaerosolen (Mengeneinheit/h) bei reinem Umluftbetrieb (pCCM:pathogen Cumulate Clean Matter) (viral Cumulate Clean Matter = vCCM) in Anlehnung an Chinesischen Standard GB/T 18801-2015 (Air Cleaner)) und $C_P$ dem pathogenen Innenraumkonzentrationsgrenzwert (Mengeneinheit/m$^3$) entsprechen.

Das obige Verfahren betrifft insbesondere eine Betriebsstrategie, die einen Mischluftvolumenstrom (entspricht einem Umluftvolumenstrom) einer Lüftungsanlage ohne einen Frischluftanteil in Abhängigkeit seiner pathogenspezifischen Luftreinigungsleistung vorgibt. Ist ein pathogener Innenraumkonzentrationsgrenzwert für eine Aufenthaltsdauer festgelegt, so ergibt sich durch die über alle einstellbaren Betriebsstrategien der Lüftungsanlage sicherzustellende pathogenspezifische Luftreinigungsleistung durch einen aus Gründen des Infektionsschutzes niemals zu unterschreitender Umluftvolumenstrom. Dieser Umluftvolumenstrom, der nicht unterschritten werden darf und der von der Pathogen-Filtrationseffizienz des Innenraumfilters für die Schadstoffpartikel oder das Bioaerosol abhängt, ergänzt die Betriebsstrategien für die Lüftungsanlage in vorteilhafter Weise, um eine Exposition der Personen in dem Innenraum pathogenen Aerosolen über einem vorgegebenen Grenzwert zu vermeiden.

Insbesondere kann durch das obige Verfahren neben dem Mischluftvolumenstrom auch der Frischluftanteil bestimmt werden, wobei die verdünnende Wirkung zuströmender Frischluft durch die Festlegung des Frischluftanteils berücksichtigt wird. Insbesondere wird die pathogenspezifische Luftreinigungsleistung durch die Zufuhr von Frischluft entsprechend erhöht:

$$pCCM^* = C_P\, (Q^*_F + \eta_R\, Q_R) \geq E$$

wobei pCCM* der pathogenspezifische Luftreinigungsleistung für den Mischbetrieb aus zugeführter Um- und Frischluft im Beharrungszustand (Mengeneinheit/h) bei einer kritischen Belastungsrisikobewertung bzw. einer kritischen Infektionsrisikobewertung ohne Berücksichtigung von Infiltration, Deposition und Inaktivierung von pathogenen Bioaerosolen entspricht.

Zur Gewährleistung eines wirkungsvollen Schutzes vor Schadstoffpartikeln oder eines wirkungsvollen Infektionsschutzes für sich im Innenraum aufhaltende Personen sieht das obige Verfahren dazu vor, gemäß der folgenden Formel für jeden Betriebszustand eines Luftbehandlungssystems einen Belastungsvolumenstrom (Infektionsschutzvolumenstrom) $Q_{IS}$ festzusetzen, d.h. die aufgrund der pathogenen Innenraumemissionen notwendige pathogenspezifische Luftreinigungsleistung durch Wahl von Mischluftvolumenstrom $Q_M = Q^*_F + Q_R\,\eta_R$ und Frischluftanteil entsprechend der Pathogen-Filtrationseffizienz und dem von der Aufenthaltsdauer im Innenraum abhängigen pathogenen Innenraumkonzentrationsgrenzwert anzupassen. Dabei gilt bei einer Bewertung eines kritischen Belastungsrisikos mit Schadstoffpartikeln bzw. einer kritischen Infektionsrisikobewertung ohne Berücksichtigung von Infiltration, Deposition und zeitlicher Inaktivierung von pathogenen Bioaerosolen:

$$Q_M = Q^*_F + Q_R\,\eta_R \geq Q_{IS} = \frac{E}{C_P}$$

Dabei stellt ein Belastungsvolumenstrom (Infektionsschutzvolumenstrom bei pathogenen Bioaerosolen) die Kennzahl aus dem Quotienten einer Innenraumemissionsgröße und einer Größe der pathogenen Innenraumkonzentrationsschwelle für die Konzentration von Schadstoffpartikeln bzw. sonstigen pathogenen Aerosolen dar.

Dadurch ergibt sich beim reinen Umluftbetrieb ein zum Infektionsschutz notwendiger Umluftvolumenstrom $Q_R = Q_{IS}\,/\,\eta_R$.

Im Mischbetrieb ergibt sich abhängig von einem Frischluftanteil $\lambda$

$$\left(\frac{\lambda}{1-\lambda} + \eta_R\right) Q_R \geq Q_{IS} = \frac{E}{C_P}$$

wobei $\lambda = Q^*_F\,/\,(Q^*_F + Q_R)$ entspricht ($\lambda \neq 1$).

Somit ist es möglich, die pathogene Innenraumbelastung durch Ändern des Frischluftanteils und durch Ändern des Umluftvolumenstroms zu kontrollieren. In Verbindung mit der gewählten Betriebsstrategie kann nun eine Anpassung des Frischluftanteils oder des Umluftvolumenstroms erfolgen.

Insbesondere kann der Frischluftanteil und/oder der Mischluftvolumenstrom inkrementell erhöht werden, bis abhängig von einer Pathogen-Filtrationseffizienz des Innenraumfilters für die Schadstoffpartikel oder das Bioaerosol ein vorgegebener Belastungsschutzvolumenstrom bzw. ein vorgegebener Infektionsschutzvolumenstrom überschritten wird.

So sollte im Temperaturregelungsbetrieb der Lüftungsanlage bei einer geringen Differenz zwischen der Temperatur der Umgebungsluft und der Solltemperatur der Innenraumluft (z.B. Umgebungstemperatur 5 °C < $\vartheta$ < 29 °C) die Anpassung des Frischluftanteils gegenüber der Anpassung des Umluftvolumenstroms höher (bis zu $\lambda$=1) priorisiert werden. Umgekehrt sollte der Frischluftvolumenstrom an sehr kalter (z.B. $\vartheta$ <5 °C) oder an sehr warmer (z.B. $\vartheta$ >29 °C) Umgebungsluft nicht geändert und stattdessen der Umluftvolumenstrom erhöht werden. Dabei sieht das obige Verfahren vor, dass insbesondere bei der i.d.R. energetisch bedingten Priorisierung des Umluftvolumenstroms ein Infektionsschutzvolumenstrom $Q_{IS}$ nicht unterschritten wird.

Es kann vorgesehen sein, dass das Erhöhen des Frischluftanteils und/oder des Umluftvolumenstroms außerhalb der vorgegebenen Betriebsstrategie nur dann durchgeführt wird, wenn sich im Innenraum mehr als eine Person befindet oder wenn kein Fenster geöffnet ist, das einen ausreichenden Luftaustausch des Innenraums mit der Umgebung gewährleistet.

So kann vorgesehen sein, dass die Betriebsstrategie die Anzahl der Personen im Innenraum als potenzielle Emissionsquellen berücksichtigt, da die Emissionsrate der pathogenen Innenraumquellen die Innenraumluftkonzentration maßgeblich beeinflusst. Die Anzahl von Personen kann beispielsweise in Fahrzeugen durch ggf. bereits vorhandene Sitzbelegungssensoren von Insassenrückhaltesystemen oder mithilfe einer Innenraumkamera festgestellt werden. So kann beispielsweise die Strategie der Einhaltung des pathogenen Innenraumkonzentrationsgrenzwertes nur dann gemäß dem obigen Verfahren verfolgt werden, wenn sich mehr als eine Person im Innenraum befindet.

Zudem kann eine Bewertung der Belastung bzw. des Infektionsgeschehens abhängig von dem Ort des Innenraums, insbesondere dem Ort des Fahrzeugs vorgenommen werden. Findet sich das Fahrzeug in einem Risikogebiet, kann entsprechend die Anpassung des Frischluftanteils geringer priorisiert werden. Zudem kann die Betriebsstrategie die Luftgüte des Innenraums beispielsweise mithilfe von $CO_2$ Luftgütesensoren als hygienische Indikation für die Luftqualität bewerten. Diese kann zudem einen minimalen Frischluftanteil vorgeben.

Gemäß einer Ausführungsform kann die pathogenspezifische Luftreinigungsleistung eines Innenraumfilters abhängig von einer Pathogen-Filtrationseffizienz des Innenraumfilters für pathogene Aerosole, dem Umluftvolumenstrom, dem Frischluftanteil und dem von der Aufenthaltsdauer im Innenraum abhängigen pathogenen Innenraumkonzentrationsgrenzwert bestimmt werden, wobei die Pathogen-Filtrationseffizienz vom Alter des Innenraumfilters und/oder vom kumulierten Luftvolumenstrom (Menge und Eigenschaften des zu reinigenden Mischluftvolumenstroms aus zugeführter Um- und Frischluft) durch den Innenraumfilter während seiner Gesamtbetriebsdauer abhängt.

Es kann vorgesehen sein, dass entweder der Frischluftanteil oder der Mischluftvolumenstrom abhängig von einer Priorisierung erhöht wird, wobei die Priorisierung entsprechend der Betriebsstrategie abhängig von einem Zustand der Innenraumluft, einem Zustand der Frischluft und/oder einer Sollvorgabe der Betriebsstrategie bestimmt wird.

Gemäß einer Ausführungsform kann signalisiert werden, insbesondere visuell oder akustisch, wenn ein Eingriff in die vorgegebene oder ausgewählte Betriebsstrategie abhängig von der Pathogen-Filtrationseffizienz und dem pathogenen Innenraumkonzentrationsgrenzwert erfolgt ist.

Ferner kann ein Bypasssteller zum Einstellen einer Kühlleistung abhängig von der gewählten Betriebsstrategie und abhängig von dem erhöhten Frischluftanteil und/oder Mischluftvolumenstrom gesteuert werden.

Gemäß einem weiteren Aspekt ist eine Lüftungsanlage für Innenraumluft in einem Innenraum vorgesehen, welche insbesondere zur Ausführung des vorstehend beschriebenen Verfahrens geeignet ist, umfassend:

- einen Umluftsteller zum variablen Einstellen eines Frischluftanteils;
- ein Gebläse zum variablen Erzeugen eines Mischluftvolumenstroms aus zugeführter Um- und Frischluft;
- eine Steuer- oder Regeleinheit, die ausgebildet ist, um einen Frischluftanteil und einen Mischluftvolumenstrom entsprechend einer vorgegebenen oder ausgewählten Betriebsstrategie bereitzustellen, um den Umluftsteller zum Einstellen eines Frischluftanteils und das Gebläse mit einer Gebläseleistung zum Einstellen des Mischluftvolumenstroms aus zugeführter Um- und Frischluft anzusteuern und um den Frischluftanteil und/oder den Umluftvolumenstrom abhängig von einer Pathogen-Filtrationseffizienz eines

Innenraumfilters für das Bioaerosol und einem Infektionsschutzvolumenstrom zu erhöhen.

Kurzbeschreibung der Zeichnungen

Ausführungsformen werden nachfolgend anhand der beigefügten Zeichnungen näher erläutert. Es zeigen:

Figur 1     eine schematische Darstellung eines Luftbehandlungssystems mit einer Lüftungsanlage für einen Innenraum;

Figur 2     ein Flussdiagramm zur Veranschaulichung eines Verfahrens zum Betreiben der Lüftungsanlage der Figur 1

Beschreibung von Ausführungsformen

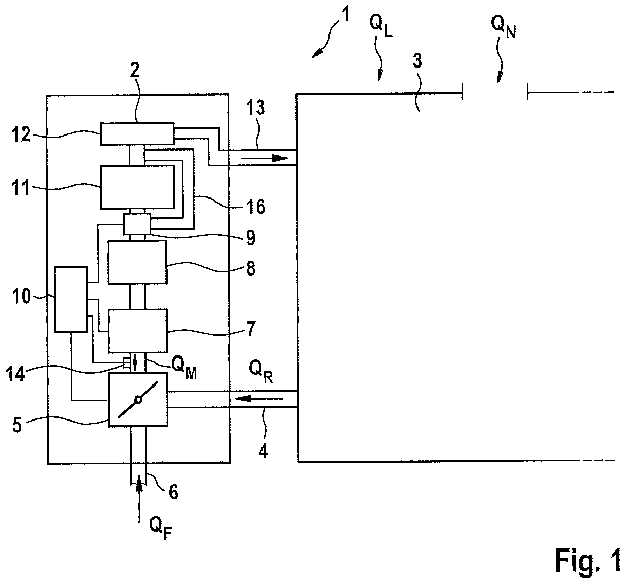

Figur 1 zeigt schematisch ein Luftbehandlungssystem 1 mit einer Lüftungsanlage 2 und einem Innenraum 3. Die Lüftungsanlage 2 dient zur Behandlung von Luft für den Innenraum 3. Die Behandlung kann ein Zugeben von Frischluft, eine Aufbereitung, eine Filterung und eine Temperierung/Klimatisierung von Frisch- und Umluft umfassen. Die behandelte Luft wird dem Innenraum 3 zugeführt.

Der Betrieb der Lüftungsanlage 2 wird von einer Steuer- oder Regeleinheit 10 gesteuert oder geregelt, die einen Microcontroller aufweist, in dem die Funktionen der Betriebsstrategie für die Lüftungsanlage 2 implementiert sind.

Die Lüftungsanlage 2 entnimmt über eine Abluftleitung 4 Innenraumluft und führt diese einem Umluftsteller 5, insbesondere in Form einer Umluftklappe, zu. Der Umluftsteller 5 ist variabel verstellbar und kann der als Umluft entnommenen Innenraumluft Frischluft aus der Umgebung 15 zuführen, die über eine Frischluftleitung 6 zugeführt wird. Der Frischluftanteil in dem ausgangsseitig des Umluftstellers 5 bereitgestellten Mischluftvolumenstrom aus zugeführter Um- und Frischluft wird durch die Einstellung des Umluftstellers 5 vorgegeben.

Dazu ist eine Steuer- oder Regeleinheit 10 vorgesehen, die der Umluftsteller 5 gemäß einem vorzugebenden Frischluftanteil stellt.

Der Umluftsteller 5 ist mit einem elektrisch ansteuerbaren Gebläse 7 verbunden, dessen Drehzahl oder Gebläseleistung ebenfalls durch die Steuer- oder Regeleinheit 10 einstellbar ist. Das Gebläse 7 bewirkt den Umluftstrom durch die Lüftungsanlage 2 und das Ansaugen der Frischluft aus der Umgebung 15.

Ausgangsseitig des Gebläses 7 ist ein Innenraumfilter 8 angeordnet, der in der Lage ist, Partikel und insbesondere Bioaerosole aus der zugeführten Luft herauszufiltern. Der Innenraumfilter 8 weist eine Pathogen-Filtrationseffizienz auf, die von dem Alter des Innenraumfilters 8 und der kumulierten gefilterten Luftmenge aus zugeführter Um- und Frischluft abhängt. Neben der oben beschriebenen druckseitigen Anordnung des Innenraumfilters stromabwärts nach dem Gebläse 7 könnte der Innenraumfilter 8 auch stromaufwärts vor dem Gebläse 7 saugseitig angeordnet sein.

Stromabwärts des Innenraumfilters 8 ist ein Bypasssteller 9, insbesondere eine Bypassklappe oder ein Bypassventil, angeordnet, der gesteuert oder geregelt durch die Steuer- oder Regeleinheit 10 variabel verstellbar ist. Durch den Bypasssteller 9 kann ein einstellbarer Anteil oder der gesamte Mischluftvolumenstrom aus zugeführter Um- und Frischluft ausgangsseitig des Innenraumfilters 8 durch eine Kühleinheit 11 geführt werden, um die durchströmende Luft gemäß einer von der Steuer- oder Regeleinheit 10 vorgegebenen bzw. einstellbaren Kühlleistung abzukühlen oder alternativ über die Bypassleitung 16 um die Kühleinheit 11 herumgeführt werden.

Aufgabe der Regelung des Bypassstellers 9 ist es, mit abnehmender Differenz des Istwerts der Innenraumlufttemperatur vom Sollwert der Innenraumlufttemperatur einen ansteigenden Anteil oder den gesamten Mischluftvolumenstrom aus zugeführter Um- und Frischluft ausgangsseitig des Innenraumfilters 8 über die Bypassleitung 16 um die Kühleinheit 11 herumführen zu können. Dadurch kann der zur Sicherstellung einer pathogenspezifischen Luftreinigungsleistung notwendige Mischluftvolumenstrom aus zugeführter Um- und Frischluft in der Lüftungsanlage zirkulieren, ohne Kühlleistung aufzunehmen und dadurch der Kühleinheit 11 Restkälte zu entziehen.

Die Kühleinheit 11 ist stromabwärts mit einer Heizungseinheit 12 verbunden, um die durchströmende Luft gemäß einer von der Steuer- oder Regeleinheit 10 vorgegebenen bzw. einstellbaren Heizleistung zu erwärmen. Der Ausgang der Heizungseinheit 12 wird über eine Zuführungsleitung 13 in den Innenraum 2 zurückgeführt.

Zudem kann ein Volumen- oder Massenstromsensor 14 vorgesehen sein, der es ermöglicht, ein Maß für die Mischluftmenge aus zugeführter Um- und Frischluft direkt oder indirekt zu bestimmen. Ferner kann der Frischluftanteil über die Stellung des Umluftstellers 5, die von der Steuer- oder Regeleinheit 10 vorgegeben wird oder über weitere Volumen- oder Massenstromsensoren, ebenfalls ermittelt werden. In Betriebsstrategien der Luftbehandlungssysteme wie einem temperaturgeregelten Betrieb ist eine Regelabweichung die Differenz des Temperatur-Sollwerts der Innenraumluft als Führungsgröße vom Temperatur-Istwert der Innenraumluft als Regelgröße. Entsprechend der Komplexität des Steuer- und Regelverfahrens der Lüftungsanlage können als Störgrößen u.a. die Umgebungstemperatur, die Luftfeuchte bzw. Taupunkt von Umgebung und Innenraum, die Gebäude- bzw. Fahrzeugoberflächentemperatur bzw. die Sonnenstrahlung bestimmt und durch die Steuer- oder Regeleinheit 10 berücksichtigt werden.

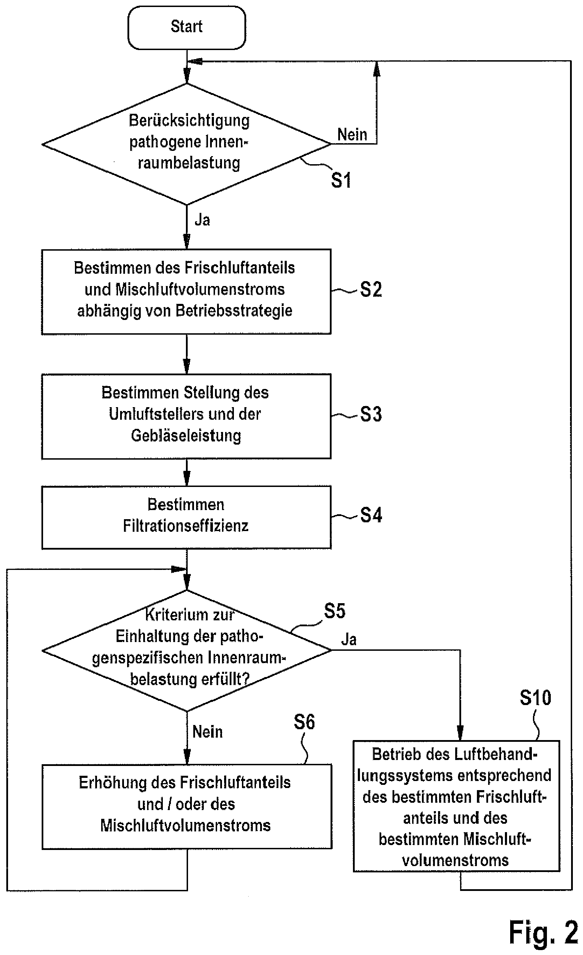

In der Steuer- oder Regeleinheit 10 wird zum Betrieb des Luftbehandlungssystems ein Verfahren ausgeführt, wie es nachfolgend anhand des Flussdiagramms der Figur 2 näher beschrieben wird. Das Verfahren kann als Software oder Hardware in der Steuer- oder Regeleinheit 10 implementiert sein. Dabei kann das Verfahren Aktualisierungen und Änderungen z.B. hinsichtlich Regelverfahren oder Parameter (insbesondere Belastungsschutzvolumenstrom bzw. Infektionsschutzvolumenstrom oder Pathogen-Filtrationseffizienz des Innenraumfilters) unterliegen, die manuell oder telemetrisch durch Änderungen der Software der Lüftungsanlage vollzogen werden, um beispielsweise neuesten Erkenntnissen des Infektionsschutzes aus der lufthygienischen Forschung Rechnung tragen zu können.

In Schritt S1 wird überprüft, ob eine pathogene Innenraumluftbelastung berücksichtigt werden muss. Beispielsweise muss keine pathogene Innenraumluftbelastung berücksichtigt werden, wenn sich im Innenraum nur eine Person befindet. Dies kann beispielsweise mit Sitzbelegungssensoren in einem Fahrzeug oder durch geeignete Kameras, deren Kamerabilder mithilfe eines Personenerkennungsverfahrens ausgewertet werden, oder dergleichen festgestellt werden. Weiterhin muss das Verfahren zur Begrenzung der Innenraumkonzentration von pathogenen Aerosolen auch dann nicht durchgeführt werden, wenn ein Fenster oder sonstiges geöffnet ist, so dass ein Luftaustausch des Innenraums mit der Umgebung gewährleistet ist.

Wird festgestellt, dass die pathogene Innenraumbelastung berücksichtigt werden muss (Alternative: ja) so wird das Verfahren mit Schritt S2 fortgesetzt, andernfalls (Alternative: Nein) wird das Verfahren mit Schritt S10 fortgesetzt, in dem die Lüftungsanlage 2 gemäß der gewählten Betriebsstrategie in herkömmlicher Weise betrieben wird. Die gewählte Betriebsstrategie gibt hierzu einen bestimmten Frischluftstrom und einen bestimmten Mischluftvolumenstrom vor.

In Schritt S2 wird entsprechend einer gewählten Betriebsstrategie der Mischluftvolumenstrom aus zugeführter Um- und Frischluft und dessen Frischluftanteil bestimmt. Die Betriebsstrategie kann einen temperaturgeregelten Betrieb, einen Betrieb mit einer maximalen Kühlleistung, einen Enteisungsbetrieb oder eine andere Betriebsart vorsehen. Der temperaturgeregelte Betrieb kann beispielsweise vorsehen, eine Temperatur der Innenraumluft konstant zu halten. Aus Gründen der Energieeffizienz sehen derartige Betriebsstrategien vor, den von dem Gebläse geförderten Frischluftvolumenstrom möglichst zu reduzieren und die Zirkulation der Mischluft zu minimieren. Dies reduziert jedoch die pathogenspezifische Luftreinigungsleistung, so dass die Menge der herausgefilterten pathogenen Aerosole geringer ist. Zur Aufrechterhaltung einer z.B. mikrobiologischen Luftgüte des Innenraums kann ein minimaler Frischluftanteil notwendig sein, der der Umluft hinzugefügt wird. Das Bestimmen des Frischluftanteils und des Umluftvolumenstroms entsprechend der vorgegebenen Betriebsstrategie erfolgt gemäß herkömmlichen an sich bekannten Verfahren, insbesondere Regelungsverfahren.

In Schritt S3 wird gemäß des bestimmten Frischluftanteils an dem Mischluftvolumenstrom aus zugeführter Um- und Frischluft und des bestimmten Umluftvolumenstroms eine Stellung des Umluftstellers 5 und eine Gebläseleistung, mit der das Gebläse 7 elektrisch angesteuert wird, bestimmt. Ferner kann je nach Betriebsstrategie eine Heizleistung sowie eine Stellung des Bypassstellers 9 zur Einstellung einer Kühlleistung festgelegt werden.

In Schritt S4 wird zunächst die Pathogen-Filtrationseffizienz des Innenraumfilters 8 für das pathogene Aerosol bestimmt. Diese hängt vom Alter des Innenraumfilter 8 und vom kumulierten Luftvolumenstrom durch den Innenraumfilter 8 während seiner Gesamtbetriebsdauer ab. Die Pathogen-Filtrationseffizienz kann beispielsweise über eine Zuordnungsfunktion, die als Kennfeld oder eine Lookup-Tabelle bereitgestellt wird, abhängig von dem Alter des Innenraumfilters 8 und/oder der Gesamtbetriebsdauer und/oder dem kumulierten Luftvolumenstrom durch den Innenraumfilter 8 ermittelt werden.

Weiterhin wird ein Belastungsschutzvolumenstrom $Q_{IS}$ durch die pathogene Innenraumemission E und den Innenraumkonzentrationsgrenzwert $C_P$ vorgegeben. Entsprechend der nachstehenden Formel kann eine Zufuhr von Frischluft $Q_F$ zur Erfüllung des Kriteriums für den Belastungsschutzvolumenstrom beitragen. Dabei gilt bei einer kritischen Belastungsrisikobewertung bzw. Infektionsrisikobewertung ohne Berücksichtigung von Infiltration, Deposition und zeitlicher Inaktivierung von pathogenen Aerosolen:

$$Q_F^* + Q_R\,\eta_R \geq Q_{IS} = \frac{E}{C_P}$$

In Schritt S5 wird überprüft, ob bei bestimmter Pathogen-Filtrationseffizienz der bestimmte Frischluftanteil und der bestimmte Mischluftvolumenstrom $Q_M$ das Kriterium des Belastungsschutzvolumenstroms erfüllt, das von der pathogenen Innenraumemission E und dem von der Aufenthaltsdauer im Innenraum abhängigen pathogenen Innenraumkonzentrationsgrenzwert abhängt. Dabei gilt bei einer kritischen Belastungsrisikobewertung ohne Berücksichtigung von Infiltration, Deposition und zeitlicher Inaktivierung von pathogenen Bioaerosolen:

$$Q_{IS} = \frac{E}{C_P} \leq \left(\frac{\lambda}{1-\lambda} + \eta_R\right) Q_R$$

wobei $\lambda = Q_F^* / (Q_F^* + Q_R)$ entspricht ($\lambda \neq 1$).

Für die Festlegung des Kriteriums Belastungsschutzvolumenstrom können zum Betrieb der Lüftungsanlage in der Steuer- oder Regeleinheit Informationen zur Bewertung des Risikos einer Schädlichkeit für bzw. eines Infektionsrisikos einer sich über eine Aufenthaltsdauer im Innenraum aufhaltende Person hinterlegt oder implementiert sein. Dazu kann eine über die Atmung aufgenommene maximal zulässige Pathogenfracht gehören, die als Produkt aus einer maximal zulässigen Innenraumkonzentration und dem über die Aufenthaltsdauer aufgenommenen Atemvolumen dargestellt werden kann. Neben einer maximal zulässigen Pathogenfracht und einer Innenraum-Emissionsrate unterschiedlicher Pathogen-Quellen können basierend auf Belastungsstudien bzw. Infektionsstudien weitere belastungsschutzrelevante Größen abhängig von der Art der pathogenen Aerosole zur Bewertung eines Belastungsrisikos herangezogen werden. Dies können zur Festlegung eines Belastungsschutzvolumenstroms insbesondere im kritischen Fall einer Risikobewertung ohne Berücksichtigung von Infiltration, Deposition und zeitlicher Inaktivierung von pathogenen Bioaerosolen die belastungsschutzrelevanten Größen einer Innenraum-Emissionsrate und eines pathogenen Innenraumkonzentrationsgrenzwerts sein.

Die Pathogen-Filtrationseffizienz eines Innenraumfilters ist ein Maß wie wirkungsvoll dessen partikelfilternde Bereiche, luftgetragene pathogene Aerosole filternd abscheiden. Dabei stellt diese Größe einen Abscheidegrad über die gesamte Partikelgrößenverteilung eines i.d.R. durch kontaminierte/infizierte Personen im Innenraum erzeugten pathogenen Aerosols dar. Wird in Laborprüfungen an einem Innenraumfilter eine Pathogen-Filtrationseffizienz mittels einer abweichenden Partikelgrößenverteilung z.B. durch ein künstlich erzeugtes virales Feinaerosol mit kleinerem mittleren geometrischen Aerosoldurchmesser ermittelt und/oder werden Undichtigkeiten des Lüftungssystems (Leckagen) berücksichtigt so kann eine entsprechende Korrektur bzw. Ergänzung des Belastungsschutzvolumenstrom-Kriteriums zur Einhaltung der pathogenspezifischen Innenraumbelastung sinnvoll werden.

Wird in Schritt S5 festgestellt, dass die sich aus der Betriebsstrategie ergebenden Einstellungen bezüglich des bestimmten Frischluftanteils und des bestimmten Umluftvolumenstroms die obige Bedingung des Belastungsschutzvolumenstrom-Kriteriums nicht erfüllen (Alternative: Nein), so wird das Verfahren mit Schritt S6 fortgesetzt, andernfalls (Alternative: Ja) wird das Verfahren mit Schritt S10 fortgesetzt.

Beispielsweise können die durch Infektionsstudien ermittelten Werte für eine Pathogen-Emissionsrate und einen pathogenen Innenraumkonzentrationsgrenzwert $C_P$ zusammen mit Pathogen-Filtrationseffizienzen, die durch künstlich erzeugte virale Feinaerosole mit kleineren mittleren geometrischen Aerosoldurchmessern bestimmt werden sowie typischen Leckageraten für das Lüftungssystem im kritischen Fall einer Risikobewertung ohne Berücksichtigung von Infiltration, Deposition und zeitlicher Inaktivierung von pathogenen Bioaerosolen einen Wert von 170 m³/h für ein Infektionsschutzvolumenstrom-Kriterium festlegen:

Im Falle des reinen Frischluftbetriebs der Lüftungsanlage ($\lambda$=1) wäre dieses Belastungsschutzvolumenstrom-Kriterium bei einem durch die Betriebsstrategie vorgegebenen Frischluftvolumenstrom größer oder gleich 170 m³/h erfüllt (Alternative: Ja, Fortsetzung des Verfahrens mit Schritt S10). Bei einem durch die Betriebsstrategie vorgegebenen Frischluftvolumenstrom kleiner 170 m³/h wäre dieses Belastungsschutzvolumenstrom-Kriterium nicht erfüllt (Alternative: Nein, Fortsetzung des Verfahrens mit Schritt S6).

Im Falle des reinen Umluftbetriebs der Lüftungsanlage ($\lambda$=0) ist die Erfüllung dieses Belastungsschutzvolumenstrom-Kriterium abhängig von den Werten des Umluftvolumenstroms und der Pathogen-Filtrationseffizienz: Bei einem durch die Betriebsstrategie vorgegebenen Umluftvolumenstrom von 200 m³/h sowie einer Pathogen-Filtrationseffizienz von 85% wäre das Infektionsschutzvolumenstrom-Kriterium gerade erfüllt (Alternative: Ja, Fortsetzung des Verfahrens mit Schritt S10).

Demgegenüber wäre bei einem durch die Betriebsstrategie vorgegebenen Umluftvolumenstrom von weniger als 170 m³/h das Belastungsschutzvolumenstrom-Kriterium selbst bei der technisch maximal möglichen Pathogen-Filtrationseffizienz von 100% nicht mehr erfüllbar (Alternative: Nein, Fortsetzung des Verfahrens mit Schritt S6).

Im Falle des Mischbetriebs aus Um- und Frischluft der Lüftungsanlage (0< λ<1) ist die Erfüllung dieses Belastungsschutzvolumenstrom-Kriterium abhängig von durch die Betriebsstrategie vorgegeben Werten des Umluftvolumenstroms und des Frischluftanteils sowie vom Wert der Pathogen-Filtrationseffizienz: So wäre bei einem durch die Betriebsstrategie vorgegebenen Umluft-volumenstrom von 60 m$^3$/h sowie einer Pathogen-Filtra-tionseffizienz von 85% das Belastungsschutzvolumen-strom-Kriterium gerade erfüllt, falls der durch die die Betriebsstrategie vorgegebene Frischluftanteil 67% nicht unterschreitet (Alternative: Ja, Fortsetzung des Verfahrens mit Schritt S10).

Umgekehrt wäre beim gleichen durch die Betriebsstrategie vorgegebenen Umluftvolumenstrom von 60 m$^3$/h selbst bei der technisch maximal möglichen Pathogen-Filtrationseffizienz von 100% das Belastungsschutzvolumenstrom-Kriterium gerade nicht erfüllt, falls der durch die die Betriebsstrategie vorgegebene Frischluftanteil 64% unterschreitet (Alternative: Nein, Fortsetzung des Verfahrens mit Schritt S6).

In Schritt S6 wird gemäß einer Priorisierung der einzustellende Frischluftanteil (durch entsprechende Stellung des Umluftstellers) und/oder der Mischluftvolumenstrom aus zugeführter Um- und Frischluft (durch ent-sprechende Einstellung der Gebläseleistung) entspre-chend erhöht, um die obige Bedingung zu erfüllen. Die Priorisierung kann entsprechend der Betriebsstrategie abhängig von einem Zustand der Innenraumluft einen Zustand der Frischluft und einer Sollvorgabe der Betriebsstrategie vorgegeben werden. So kann beispielsweise bei einem Temperaturregelungsbetrieb die Erhöhung des Frischluftanteils höher priorisiert werden, wenn die Temperaturdifferenz zwischen der Solltemperatur der Innenraumluft und der Temperatur der Außenluft ge-ringer als ein vorgegebener Temperaturdifferenzschwel-lenwert ist und die Erhöhung der Gebläseleistung höher priorisiert werden, wenn die Temperaturdifferenz zwischen der Solltemperatur der Innenraumluft und der Temperatur der Außenluft größer ist als ein Temperaturdifferenzschwellenwert.

So können zur Erfüllung des Kriteriums zur pathogenspezifischen Innenraumbelastung auch für den zuvor in der Beschreibung des Schritts S5 dargestellten Anwendungsfall entweder die Erhöhung des Frischluftanteils und/oder des Umluftvolumenstroms priorisiert werden:

Falls selbst bei der technisch maximal möglichen Pathogen-Filtrationseffizienz von 100% das Belastungsschutzvolumenstrom-Kriterium gerade nicht erfüllt wäre, da der durch die Betriebsstrategie vorgegebene Umluft-volumenstrom 60 m$^3$/h und der durch die die Betriebsstrategie vorgegebene Frischluftanteil 64% beträgt, wür-de beispielsweise bei einem Temperaturregelungsbe-trieb bevorzugt der Frischluftanteils weiter erhöht werden, wenn die Temperaturdifferenz zwischen der Solltemperatur der Innenraumluft und der Temperatur der Außenluft geringer als ein vorgegebener Temperaturdifferenzschwellenwert ist. Umgekehrt würde bevorzugt die Gebläseleistung weiter erhöht werden, wenn die Temperaturdifferenz zwischen der Solltemperatur der Innenraumluft und der Temperatur der Außenluft größer ist als ein Temperaturdifferenzschwellenwert.

Ähnliche Priorisierungsmuster können abhängig von einer Partikel- und Schadstoffbelastung der Umgebungsluft vorgenommen werden. Zudem kann eine Vorgabe zur Schonung des Innenraumfilters eine Reduzierung des Frischluftanteils entsprechend einer vorgegebenen Gewichtung bewirken.

Nachfolgend wird zu Schritt S5 zurückgesprungen.

In Schritt S10 kann die Lüftungsanlage gemäß den bestimmten Frischluftanteil und dem bestimmten Umluftvolumenstrom betrieben werden. Ferner kann dem Benutzer der Eingriff in die Betriebsstrategie auf-grund der Innenraumbelastungsreduktion mit pathoge-nen Aerosolen in entsprechender Weise angezeigt werden. Dies kann den Benutzer insbesondere darüber informieren, warum die Gebläseleistung höher als erwartet ist, speziell falls diese mit einem geringeren akustischen Komfort einhergehen sollte.

Dazu kann durch eine Anzeige signalisiert werden, z.B. optisch über die aus Fahrzeugen bekannten Anzeigeelemente (piktogrammartig oder als Textnachricht digitaler Anzeigetafeln) und/oder mit einem akustischen Signalton oder einer Sprachnachricht bei einem oder mehreren der folgenden Fälle:

- bei Aktivierung oder Deaktivierung des Verfahrens gemäß Schritt S1, und
- bei einem (erstem) Eingriff des Verfahrens in die übliche Betriebsstrategie nach Beginn der Fahrt bzw. des Aufenthalts durch eine dadurch veränderte Lüfterdrehzahl (erhöhte) oder Klappenstellungen (Um-/Frischluft, Bypass), insbesondere wenn störende Effekte (geringerer akustischer Komfort durch erhöhte Lüfterdrehzahl) zu erwarten wären/auftreten könnten.

Ebenso kann eine Information an mit dem Fahrzeug verbundene Systeme wie Smartphones, etc. gesendet werden.

In Schritt S10 kann ferner der Bypasssteller 9 gemäß einer in der gewählten Betriebsstrategie vorgesehenen Temperaturregelung gestellt werden. Dadurch kann sich bei einem durch das obige Verfahren bewirkten erhöhten Mischluftvolumenstrom eine Änderung der Einstellung des Bypassstellers 9 ergeben.

Falls z.B. bei Anwendung der Betriebsstrategie "temperaturgeregelter Betrieb" in einer heißen Umgebung der Innenraum durch längeren Betrieb der Lüftungsanlage bereits nah der geringeren Solltemperatur eingeregelt wurde (geringe Regelabweichung, hoher thermischer Komfort erreicht) wäre aufgrund der Betriebsstrategie kein oder nur ein geringer Mischluftvolumenstrom notwendig. Falls durch das Verfahren ein deutlich höherer Mischluftvolumenstrom gefordert wird (aufgrund Belastungsschutz) und dieser durch den Verdampfer geleitet würde, hat dies ggfs. eine weitere ungewollte Abkühlung des Innenraums zur Folge und die Restkälte des Verdampfers steht für einen nachfolgenden Kühlbedarf nicht mehr zur Verfügung, da diese bereits zuvor abtransportiert worden ist.

**Patentansprüche**

1. Verfahren zum Betreiben einer Lüftungsanlage (2) für Innenraumluft in einem Innenraum (3), insbesondere eines Kraftfahrzeugs, mit folgenden Schritten:

    - Bereitstellen eines Frischluftanteils ($\lambda$) von zugeführter Frischluft und eines Umluftvolumenstroms ($Q_R$) entsprechend einer vorgegebenen oder ausgewählten Betriebsstrategie;
    - Bestimmen von Einstellungen für einen Umluftsteller (5) zum Einstellen des Frischluftanteils, insbesondere eine Umluftklappe oder ein Umluftventil, und einer Gebläseleistung eines Gebläses (7) zum Einstellen eines Mischluftvolumenstroms ($QM$) aus zugeführter Um- und Frischluft;
    - Erhöhen des Frischluftanteils ($\lambda$) und/oder des Mischluftvolumenstroms ($Q_M$) abhängig von einer Pathogen-Filtrationseffizienz eines Innenraumfilters (8) und einem vorgegebenen Belastungsschutzvolumenstrom als ein pathogener Innenraumkonzentrationsgrenzwert ($C_P$) für eine maximale Konzentration von pathogenen Aerosolen.

2. Verfahren nach Anspruch 1, wobei das Erhöhen des Frischluftanteils ($\lambda$) und/oder des Umluftvolumenstroms ($Q_R$) außerhalb der vorgegebenen Betriebsstrategie nur dann durchgeführt wird, wenn sich im Innenraum mehr als eine Person befindet oder wenn kein Fenster geöffnet ist.

3. Verfahren nach Anspruch 1 oder 2, wobei die Betriebsstrategie einen temperaturgeregelten Betrieb, der vorsieht, eine Temperatur der Innenraumluft konstant zu halten, einen Betrieb mit einer maximalen Kühlleistung für die Innenraumluft oder einen Enteisungsbetrieb mit einer maximalen Heizleistung für die Innenraumluft vorgibt.

4. Verfahren nach einem der Ansprüche 1 bis 3, wobei der Frischluftanteil ($\lambda$) und/oder der Mischluftvolumenstrom ($Q_M$) inkrementell erhöht wird, bis ein durch die Pathogen-Filtrationseffizienz des Innenraumfilters (8) und den vorgegebenen Belastungsschutzvolumenstrom bestimmter Schwellenwert für die pathogene Innenraumkonzentration unterschritten wird.

5. Verfahren nach einem der Ansprüche 1 bis 4, wobei die Pathogen-Filtrationseffizienz eines Innenraumfilters (8) vom Alter des Innenraumfilters (8) und/oder vom kumulierten Luftvolumenstrom durch den Innenraumfilter (8) während seiner Gesamtbetriebsdauer abhängt.

6. Verfahren nach einem der Ansprüche 1 bis 5, wobei entweder der Frischluftanteil ($\lambda$) oder der Mischluftvolumenstrom ($Q_M$) abhängig von einer Priorisierung erhöht wird, wobei die Priorisierung entsprechend der Betriebsstrategie abhängig von einem Zustand der Innenraumluft, einem Zustand der Frischluft und/oder einer Sollvorgabe der Betriebsstrategie bestimmt wird.

7. Verfahren nach einem der Ansprüche 1 bis 6, wobei signalisiert wird, insbesondere visuell oder akustisch, wenn ein Eingriff in die vorgegebene oder ausgewählte Betriebsstrategie abhängig von der Pathogen-Filtrationseffizienz und dem pathogenen Innenraumkonzentrationsgrenzwert ($C_P$) erfolgt ist.

8. Verfahren nach einem der Ansprüche 1 bis 7, wobei ein Bypasssteller (9) zum Einstellen einer Kühlleistung abhängig von der gewählten Betriebsstrategie und abhängig von dem erhöhten Frischluftanteil ($\lambda$) und/oder Mischluftvolumenstrom ($Q_M$) gesteuert wird.

9. Lüftungsanlage (2) für Innenraumluft in einem Innenraum (3), umfassend:

    - einen Umluftsteller (5), insbesondere eine Umluftklappe oder ein Umluftventil, der ausgebildet ist, um einen Frischluftanteil ($\lambda$) variabel einzustellen;
    - ein Gebläse (7) zum Erzeugen eines Mischluftvolumenstroms aus zugeführter Um- und Frischluft;
    - eine Steuer- oder Regeleinheit (10), die ausgebildet ist, um einen Frischluftanteil ($\lambda$) und einen Mischluftvolumenstrom ($Q_M$) entsprechend einer vorgegebenen oder ausgewählten Betriebsstrategie bereitzustellen, um den Umluftsteller (5) zum Einstellen eines Frischluftanteils ($\lambda$) und das Gebläse (7) mit einer Gebläseleistung zum Einstellen des Mischluftvolumenstroms ($Q_M$) aus zugeführter Um- und Frischluft anzusteuern und um den Frischluftanteil ($\lambda$) und/oder den Mischluftvolumenstrom ($Q_M$) abhängig von einer Pathogen-Filtrationseffizienz eines Innenraumfilters (8) und einem vorgegebenen Belastungsschutzvolumenstrom als ein pathogener Innenraumkonzentrationsgrenzwert ($C_P$) für eine maximale Konzentration von pathogenen Aerosolen zu erhöhen.

Fig. 1

**Start**

Berücksichtigung
pathogene Innenraumbelastung — Nein — S1

Ja

Bestimmen des Frischluftanteils
und Mischluftvolumenstroms
abhängig von Betriebsstrategie — S2

Bestimmen Stellung des
Umluftstellers und der
Gebläseleistung — S3

Bestimmen
Filtrationseffizienz — S4

Kriterium zur
Einhaltung der pathogenspezifischen Innenraumbelastung erfüllt? — S5 — Ja

Nein — S6

Erhöhung des Frischluftanteils
und / oder des
Mischluftvolumenstroms

S10

Betrieb des Luftbehandlungssystems entsprechend
des bestimmten Frischluftanteils und des
bestimmten Mischluftvolumenstroms

**Fig. 2**

Europäisches
Patentamt

European
Patent Office

Office européen
des brevets

# EUROPÄISCHER RECHERCHENBERICHT

Nummer der Anmeldung

EP 21 21 4700

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 196 51 403 A1 (T E M TECH ENTWICKLUNG UND MAN [DE]) 18. Juni 1998 (1998-06-18) | 1-4,6,9 | INV. B60H1/00 |
| Y | * das ganze Dokument * ----- | 5,7,8 | B01D46/00 F24F11/39 |
| X | DE 10 2020 005281 A1 (DAIMLER AG [DE]) 19. November 2020 (2020-11-19) * das ganze Dokument * ----- | 1-4,6,8, 9 | ADD. B60H3/06 F24F11/00 |
| Y | DE 10 2015 117665 A1 (BOMBARDIER TRANSP GMBH [DE]) 20. April 2017 (2017-04-20) * das ganze Dokument * ----- | 5,7 | |
| Y | US 2004/141875 A1 (DOSHI RAJIV [US]) 22. Juli 2004 (2004-07-22) * das ganze Dokument * ----- | 8 | |

RECHERCHIERTE SACHGEBIETE (IPC)

B60H
B01D
F24F

Der vorliegende Recherchenbericht wurde für alle Patentansprüche erstellt

| Recherchenort | Abschlußdatum der Recherche | Prüfer |
|---|---|---|
| München | 1. Juni 2022 | Gumbel, Andreas |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

.........................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 4700

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-06-2022

| Im Recherchenbericht angeführtes Patentdokument | Datum der Veröffentlichung | Mitglied(er) der Patentfamilie | Datum der Veröffentlichung |
|---|---|---|---|
| DE 19651403 A1 | 18-06-1998 | KEINE | |
| DE 102020005281 A1 | 19-11-2020 | KEINE | |
| DE 102015117665 A1 | 20-04-2017 | DE 102015117665 A1<br>EP 3156302 A1 | 20-04-2017<br>19-04-2017 |
| US 2004141875 A1 | 22-07-2004 | US 2004141875 A1<br>WO 2004065148 A2 | 22-07-2004<br>05-08-2004 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1422089 A2
- DE 102005006312 A1
- DE 102013220369 A1
- DE 10013841 A1